# EUROPÄISCHE PATENTSCHRIFT

(11) **EP 2 776 702 B1**
(45) Veröffentlichungstag und Bekanntmachung des Hinweises auf die Patenterteilung: **11.01.2017**
(21) Anmeldenummer: 12805937.5
(22) Anmeldetag: 09.11.2012
(51) Int. Cl.: F02M 61/18

(54) **EINSPRITZDÜSE**
INJECTION NOZZLE
INJECTEUR

(30) Priorität: 10.11.2011 DE 102011118299
(43) Veröffentlichungstag der Anmeldung: 17.09.2014
(73) Patentinhaber: Daimler AG, 70327 Stuttgart (DE)
(72) Erfinder: BÖCKING, Tobias, 70565 Stuttgart (DE); ECHTLE, Harald, 77723 Gengenbach (DE); HERGEMÖLLER, Thorsten, 71394 Kernen (DE); HERRMANN, Lothar, 74523 Schwäbisch Hall (DE); RÖSSLER, Klaus, 70499 Stuttgart (DE)
(74) Vertreter: JENSEN & SON
(86) Internationale Anmeldenummer: PCT/EP2012/004653
(87) Internationale Veröffentlichungsnummer: WO 2013/068121

(56) Entgegenhaltungen:
- EP-A1- 1 775 439
- WO-A1-2012/010356
- DE-A1-102008 036 840
- JP-A- 2007 132 231
- US-A1- 2010 237 174

## Beschreibung

Die vorliegende Erfindung betrifft einen Kolbenmotor mit mindestens einem Zylinder und mit einer Einspritzdüse zur Direkteinspritzung eines flüssigen Kraftstoffs in einen Zylinderraum des fremdgezündeten Kolbenmotors mit den Merkmalen des Oberbegriffs des Anspruchs 1 und dem Oberbegriff des Anspruchs 2.

Aus der DE 10 2006 037 413 B4 ist eine Einspritzdüse bekannt, die mehrere Spritzlöcher zum Erzeugen von sternförmig verlaufenden Einspritzstrahlen umfasst, wobei die Spritzlöcher an einem Düsenkörper der Einspritzdüse in der Umfangsrichtung verteilt angeordnet sind. Die bekannte Einspritzdüse besitzt dabei sechs Spritzlöcher, die in zwei Gruppen zu jeweils drei Spritzlöchern eingeteilt sind. Die beiden Spritzlochgruppen sind dabei diametral voneinander abgewandt. Innerhalb der jeweiligen Spritzlochgruppe besitzen die in der Umfangsrichtung benachbarten Spritzlöcher zwischen ihren Längsmittelachsen im Wesentlichen die gleichen Winkel. Die bekannte Einspritzdüse wird im zugehörigen Zylinder gezielt so positioniert, dass die eine Spritzlochgruppe zwei Einlassventilen zugeordnet ist, während die andere Spritzlochgruppe zwei Auslassventilen zugeordnet ist.

Aus der US 2010/0237174 A1 ist ein Kolbenmotor mit mindestens einem Zylinder und mit einer Einspritzdüse zur Direkteinspritzung eines flüssigen Kraftstoffs in einen Zylinderraum des fremdgezündeten Kolbenmotors bekannt. An einem Düsenkörper der Einspritzdüse sind in der Umfangsrichtung verteilt mehrere Spritzlöcher zum Erzeugen von Einspritzstrahlen angeordnet. Es ist zumindest ein Paar von in Umfangsrichtung benachbarten Spritzlöchern vorgesehen, deren Längsmittelachsen in der Umfangsrichtung einen Paarwinkel einschließen, der kleiner ist als ein Nachbarwinkel der in der Umfangsrichtung zwischen der Längsmittelachse des jeweiligen Spritzlochs des Spritzlochpaars und einer Längsmittelachse eines in der Umfangsrichtung zum Spritzlochpaar benachbarten Spritzlochs eingeschlossen ist. Es sind sechs Spritzlöcher vorgesehen, wobei zwei Spritzlochpaare vorgesehen sind, die diametral voneinander abgewandt sind und in der Umfangsrichtung zwischen den beiden Spritzlochpaaren jeweils ein weiteres Spritzloch angeordnet ist. Die Einspritzdüse ist seitlich im Zylinder angeordnet und eine Zündvorrichtung ist im Bereich einer Längsmittelachse des Zylinders angeordnet.

Die DE 10 2010 031 653 A1 offenbart eine Einspritzdüse mit Spritzlöchern, die in der Umfangsrichtung der Einspritzdüse verteilt sind.

Um bei Otto-Motoren, also bei fremdgezündeten Kolbenmotoren, die mit innerer Gemischbildung, also mit Direkteinspritzung arbeiten, eine effiziente und schadstoffarme Verbrennung erzielen zu können, muss im Homogenbetrieb eine möglichst gute Verteilung des Kraftstoffs im Brennraum erreicht werden. Dabei ist eine Benetzung von Brennraumwänden, also eine Zylinderwand, eine dem Zylinderraum zugewandte Kolbenoberseite und eine dem Zylinderraum zugewandte Zylinderkopfunterseite, sowie der Gaswechselventile mit flüssigem Kraftstoff zu vermeiden, da dies zu erhöhten Schadstoffemissionen führen würde. Dieses Problem verschärft sich, je kleiner die zur Verfügung stehenden Zylinderräume sind, da sich durch den reduzierten Hubraum die freien Ausbreitungswege, die für die Einspritzstrahlen zur Verfügung stehen, entsprechend reduzieren. Zur Reduzierung des Kraftstoffverbrauchs werden jedoch zunehmend hubraumkleine Motoren angestrebt.

Die vorliegende Erfindung beschäftigt sich mit dem Problem, für eine Einspritzdüse bzw. für einen Kolbenmotor bzw. für ein Einspritzverfahren eine verbesserte Ausführungsform anzugeben, die sich insbesondere dadurch auszeichnet, dass die Gefahr einer Benetzung von Brennraumwänden mit flüssigem Kraftstoff reduziert ist.

Dieses Problem wird erfindungsgemäß durch die Merkmale der unabhängigen Ansprüche gelöst. Vorteilhafte Ausführungsformen sind Gegenstand der abhängigen Ansprüche.

Die Erfindung beruht auf dem allgemeinen Gedanken, zwischen zwei in der Umfangsrichtung benachbarten Einspritzstrahlen eine Wechselwirkung bzw. Interaktion zu erzeugen, welche die Strahlausbreitungsrichtung beeinflusst und dadurch die Eindringtiefe der Einspritzstrahlen reduziert. Die jeweilige Interaktion führt zu einer Deviation der beiden in Wechselwirkung stehenden Einspritzstrahlen aufeinander zu. Die Erfindung beruht hierbei auf der Erkenntnis, dass zwischen zwei in der Umfangsrichtung benachbarten Einspritzstrahlen eine derartige Interaktion mit Deviation auftritt, wenn die beiden Einspritzstrahlen in der Umfangsrichtung einen vergleichsweise kleinen Abstand zueinander besitzen. Der Abstand benachbarter Einspritzstrahlen kann durch den Winkel definiert werden, den die Längsmittelachsen der beiden Einspritzstrahlen einschließen bzw. den die Längsmittelachsen der beiden zugehörigen Spritzlöcher einschließen. Die Erfindung nutzt hierbei die Erkenntnis, dass ein einzelner Einspritzstrahl mit der ihn umhüllenden Frischluft in Wechselwirkung steht, derart, dass die Frischluft den jeweiligen Einspritzstrahl quer zu seiner Ausbreitungsrichtung zu seiner Mitte hin zusammendrückt und einer Ausdehnung des Einspritzstrahls quer zu seiner Ausbreitungsrichtung entgegenwirkt. Sind jedoch zwei Einspritzstrahlen relativ dicht nebeneinander angeordnet, ist zwischen diesen beiden Einspritzstrahlen nur vergleichsweise wenig Frischluft vorhanden, so dass dort, also an den einander zugewandten Innenseiten der Einspritzstrahlen die zuvor beschriebene Wechselwirkung mit der Frischluft stark reduziert ist. In der Folge können sich die beiden Einspritzstrahlen stärker aufeinander zu ausbreiten. Gleichzeitig überwiegen nun die an den voneinander abgewandten Außenseiten der Einspritzstrahlen wirksamen Wechselwirkungen mit der Frischluft, so dass diese die beiden Einspritzstrahlen aufeinander zu ablenken. Somit kommt es schließlich zur gewünschten Deviation der beiden vergleichsweise nah beieinander liegenden Einspritzstrahlen.

Es ist klar, dass dabei nicht nur der winkelmäßige Abstand der benachbarten Einspritzstrahlen ausschlaggebend ist für die gewünschte Interaktion mit Deviation der Einspritzstrahlen. Jedoch handelt es sich dabei um einen wichtigen Parameter. Andere Parameter, welche die Interaktion der benachbarten Einspritzstrahlen beeinflussen, sind beispielsweise eine Spritzlochlänge, Druckverhältnisse innerhalb der Einspritzdüse sowie ein Strömungsverlauf des Kraftstoffs innerhalb der Einspritzdüse zum jeweiligen Spritzloch.

Ferner ist es zur Realisierung der gewünschten Interaktion mit Deviation von entscheidender Bedeutung, dass innerhalb der Einspritzstrahlen zumindest ein Paar, bestehend aus genau zwei Einspritzstrahlen, gebildet wird, die in der Umfangsrichtung benachbart sind und deren Abstand voneinander kleiner ist als der Abstand eines der Einspritzstrahlen des Strahlpaares gegenüber einem anderen Einspritzstrahl, der nicht zu demselben Strahlpaar gehört. Mit anderen Worten, die beiden, dem jeweiligen Strahlpaar zugeordneten Einspritzstrahlen besitzen in der einen Richtung zum zugehörigen Einspritzstrahl desselben Strahlpaars einen vergleichsweise kleinen Abstand, während sie in der anderen Richtung zu einem weiteren Einspritzstrahl, der zum Strahlpaar benachbart ist, einen größeren Abstand aufweisen. Auf diese Weise ist sichergestellt, dass die an den Außenseiten der beiden Einspritzstrahlen des jeweiligen Strahlpaares wirksamen Wechselwirkungen mit der Frischluft ausreichen, die beiden Einspritzstrahlen aufeinander zu abzulenken.

Für die Einspritzdüse bedeutet dies, dass zumindest ein Paar von in Umfangsrichtung benachbarten Spritzlöchern vorgesehen ist, deren Längsmittelachsen in der Umfangsrichtung einen Paarwinkel einschließen, der kleiner ist als ein Nachbarwinkel, der in der Umfangsrichtung zwischen der Längsmittelachse jedes Spritzlochs des Spritzlochpaars und einer Längsmittelachse eines in der Umfangsrichtung zum Spritzlochpaar benachbarten Spritzlochs eingeschlossen ist.

Als vorteilhaft hat sich erwiesen, den jeweiligen Paarwinkel bei maximal 50° zu wählen. Vorzugsweise kann der Paarwinkel etwa 45° betragen. Im Unterschied dazu kann der jeweilige Nachbarwinkel minimal 60° betragen. Bevorzugt werden dabei Nachbarwinkel von etwa 70° oder 80°. Es ist klar, dass grundsätzlich die Paarwinkel und die Nachbarwinkel von der Anzahl der Einspritzstrahlen bzw. von der Anzahl der Spritzlöcher abhängt. Bevorzugte Spritzlochzahlen sind 5 bis 7.

Entsprechend einer anderen vorteilhaften Ausführungsform können genau sechs Spritzlöcher vorgesehen sein. Zweckmäßig können bei sechs Spritzlöchern genau zwei Spritzlochpaare vorgesehen sein, die diametral voneinander abgewandt sind, wobei in der Umfangsrichtung zwischen den beiden Spritzlochpaaren jeweils ein weiteres Spritzloch angeordnet ist. Dabei sind diese beiden weiteren Spritzlöcher zweckmäßig diametral voneinander abgewandt. Mit Hilfe einer derartigen Konfiguration ist es beispielsweise möglich, die beiden Spritzlochpaare Einlassventilen und Auslassventilen zuzuordnen, um gezielt im Bereich der Gaswechselventile reduzierte Eindringtiefen für die Einspritzstrahlen zu realisieren. Ferner lassen sich hierdurch günstige Gemischbildungen im Bereich einer Zündeinrichtung realisieren, sofern eines der Spritzlochpaare der Zündeinrichtung zugeordnet ist. Eine günstige Gemischbildung verbessert eine Schichtladung, eine Zündeinspritzung sowie ein sogenanntes Katheizen. Durch das Ausrichten des einen Spritzlochpaars auf die Einlassventile kann gleichzeitig eine Benetzung der Einlassventile mit Kraftstoff vermieden werden.

Gemäß einer alternativen Ausführungsform, bei der ebenfalls sechs Spritzlöcher vorgesehen sind, können drei Spritzlochpaare ausgebildet werden, die in der Umfangsrichtung zweckmäßig gleichmäßig verteilt angeordnet sind, also bezüglich ihrer Mittelachsen zueinander etwa um 120° beabstandet sind. Bei einer derartigen Konfiguration lässt sich die Eindringtiefe bei allen Einspritzstrahlen reduzieren, wodurch insbesondere eine Einlassventilbenetzung vermieden werden kann. Darüber hinaus lässt sich auch bei derartigen Konfigurationen einfach eine günstige Gemischbildung im Bereich einer Zündeinrichtung einstellen. Eine günstige Gemischbildung verbessert eine Schichtladung, eine Zündeinspritzung sowie ein sogenanntes Katheizen.

Entsprechend einer anderen vorteilhaften Ausführungsform kann im Düsenkörper ein zu den Spritzlöchern führender Versorgungspfad ausgebildet sein, in dem der Kraftstoff während eines Einspritzvorgangs in einer Zuströmungsrichtung strömt, die im Bereich des jeweiligen Spritzlochs im Versorgungspfad gegenüber der Längsmittelachse des jeweiligen Spritzlochs in einem Bereich von 60° bis 90° geneigt ist. Durch diese Maßnahme wird innerhalb des Düsenkörpers unmittelbar vor dem Eintreten des Kraftstoffs in das jeweilige Spritzloch eine intensive Strömungsumlenkung realisiert, was eine Reduzierung der Eindringtiefe begünstigt.

Gemäß einer anderen Ausführungsform kann das jeweilige Spritzloch eine koaxial zur Längsmittelachse des Spritzlochs gemessene Lochlänge und einen Lochdurchmesser aufweisen, wobei ein Verhältnis von Lochlänge zu Lochdurchmesser in einem Bereich von 0,5 bis 4,0 liegt. Es hat sich gezeigt, dass derartige Verhältnisse von Lochlänge zu Lochdurchmesser eine Reduzierung der Eindringtiefe begünstigen.

Beispielsweise kann eine Lochlänge in einem Bereich von 80 µm bis 300 µm liegen. Für Lochdurchmesser haben sich Werte von 80 µm bis 160 µm als vorteilhaft erwiesen.

Die für den Einspritzvorgang herrschenden Drücke im Kraftstoff können z.B. in einem Bereich von 10 MPa bis 25 MPa, also in einem Bereich von 100 bar bis 250 bar liegen.

Bei einer anderen vorteilhaften Ausführungsform kann das jeweilige Spritzloch in seiner Längsrichtung einen innenliegenden Strahlbildungsabschnitt und einen außenliegenden Austrittsabschnitt aufweisen. Der Strahlbildungsabschnitt definiert dabei die Lochlänge und den Lochdurchmesser des Spritzlochs. Der Austrittsabschnitt besitzt einen Durchmesser, der größer ist als der Lochdurchmesser des Strahlbildungsabschnitts. Die Länge des Austrittsabschnitts kann dabei im Wesentlichen gleich groß sein wie die Länge des Strahlbildungsabschnitts. Diese gestufte Ausgestaltung des jeweiligen Spritzlochs begünstigt die Erzeugung von Einspritzstrahlen mit geringer Eindringtiefe.

Ein erfindungsgemäßer Kolbenmotor umfasst zumindest einen Zylinder und zumindest eine Einspritzdüse der vorstehend beschriebenen Art je Zylinder, wobei mit Hilfe der jeweiligen Einspritzdüse eine Direkteinspritzung von flüssigem Kraftstoff in einen Zylinderraum des jeweiligen Zylinders durchführbar ist. Die Einspritzdüse ist dabei im Bereich einer Längsmittelachse des Zylinders angeordnet, während eine Zündeinrichtung des jeweiligen Zylinders beabstandet zur Einspritzdüse angeordnet ist. Die jeweilige Einspritzdüse kann nun hinsichtlich ihrer Spritzlöcher so ausgerichtet sein, dass die Zündeinrichtung in der Umfangsrichtung zwischen den beiden Einspritzstrahlen eines solchen Spritzlochpaars oder aber zwischen zwei in der Umfangsrichtung benachbarten Spritzlochpaaren angeordnet ist.

Eine Längsmittelachse der Einspritzdüse kann dabei insbesondere parallel zur Längsmittelachse des Zylinders verlaufen. Ebenso ist es möglich, zwischen der Längsmittelachse der Einspritzdüse und der Längsmittelachse des Zylinders eine Neigung vorzusehen, die jedoch vorzugsweise kleiner als 20° oder gleich 20° ist.

Bei einer zweckmäßigen Weiterbildung kann die Zündeinrichtung in der Umfangsrichtung zwischen zwei Auslassventilen des jeweiligen Zylinders angeordnet sein. Zusätzlich oder alternativ kann die Einspritzdüse hinsichtlich ihrer Spritzlöcher so ausgerichtet sein, dass die Einspritzstrahlen eines solchen Spritzlochpaares in der Umfangsrichtung zwischen zwei Einlassventilen des jeweiligen Zylinders verlaufen. Durch diese Ausrichtung wird insbesondere erreicht, dass die Gefahr einer Benetzung der Einlassventile signifikant reduziert ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1-3: jeweils einen stark vereinfachten Querschnitt eines Zylinders eines Kolbenmotors während eines Einspritzvorgangs, bei verschiedenen Ausführungsformen,
- Fig. 4-6: jeweils einen stark vereinfachten Längsschnitt einer Einspritzdüse im Bereich eines Spritzlochs, bei verschiedenen Ausführungsformen.

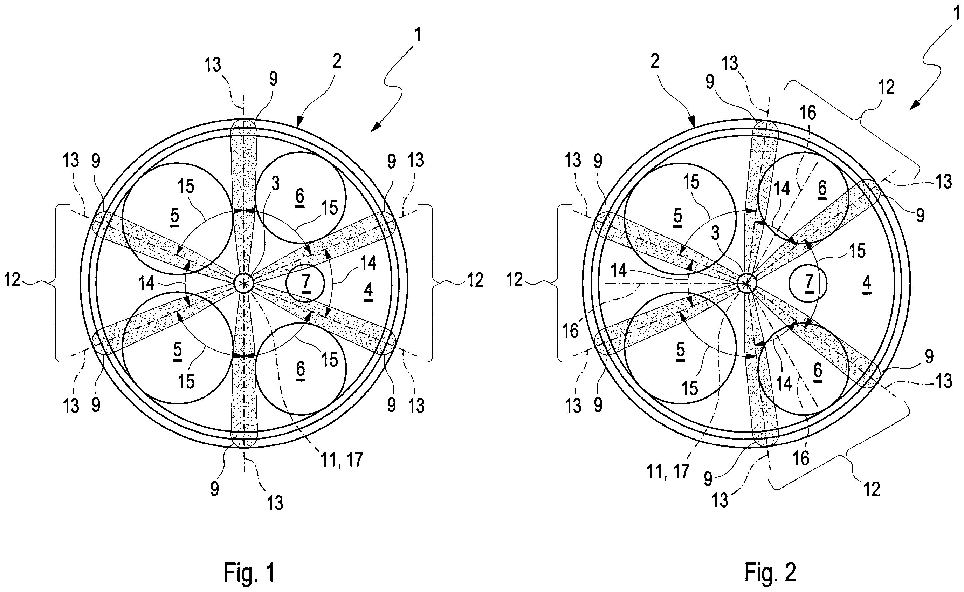

Entsprechend den Figuren 1-3 umfasst ein Kolbenmotor 1 zumindest einen Zylinder 2 und je Zylinder 2 eine Einspritzdüse 3. Mit Hilfe der Einspritzdüse 3 kann ein flüssiger Kraftstoff direkt in einen Zylinderraum 4 des jeweiligen Zylinders 2 eingespritzt werden. Ferner sind dem jeweiligen Zylinder 2 Gaswechselventile 5, 6 zugeordnet, nämlich im Beispiel zwei Einlassventile 5 und zwei Auslassventile 6. Des Weiteren ist je Zylinder 2 eine Zündeinrichtung 7 vorgesehen, zum Beispiel eine Zündkerze, so dass es sich beim Kolbenmotor 1 um einen fremdgezündeten Kolbenmotor 1 handelt, also um einen OttoMotor.

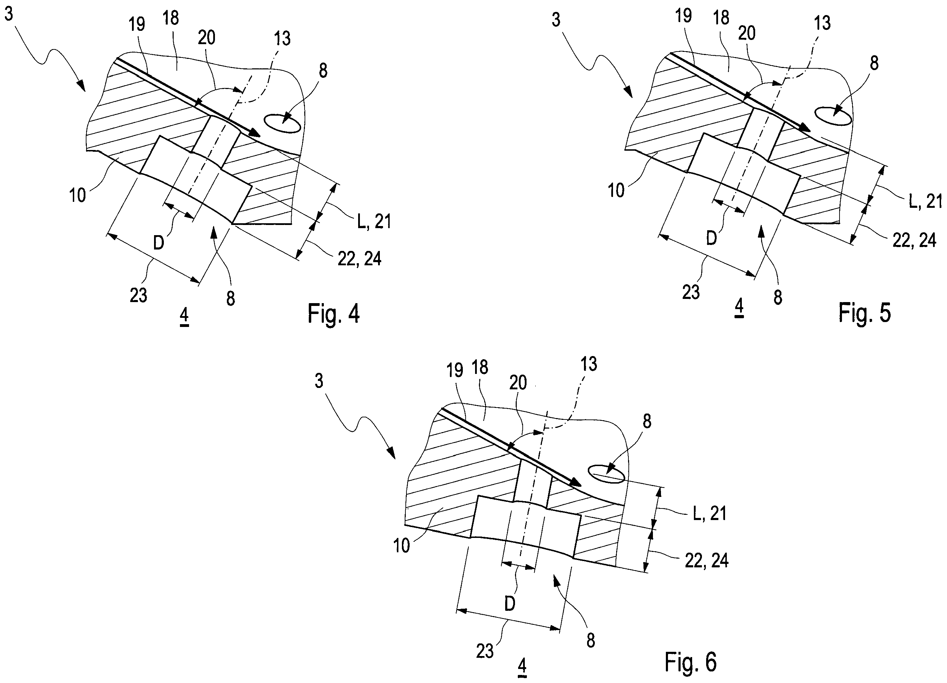

Entsprechend den Figuren 1-6 umfasst die jeweilige Einspritzdüse 3 mehrere in den Figuren 4-6 erkennbare Spritzlöcher 8, die während eines Einspritzvorgangs mehrere in den Figuren 1-3 gezeigte Einspritzstrahlen 9 erzeugen. In den bevorzugten Beispielen der Figuren 1-3 sind genau sechs Spritzlöcher 8 zum Erzeugen von sechs Einspritzstrahlen 9 vorgesehen. Bevorzugt werden Ausführungsformen mit fünf bis sieben Spritzlöchern 8. Andere Spritzlochzahlen sind grundsätzlich ebenfalls vorstellbar.

Die Spritzlöcher 8 sind an einem Düsenkörper 10 der Einspritzdüse 3 in der Umfangsrichtung der Einspritzdüse 3 verteilt angeordnet, derart, dass sich während des Einspritzvorgangs eine sternförmige Anordnung der Einspritzstrahlen 9 einstellt. Die Umfangsrichtung bezieht sich dabei auf eine Längsmittelachse 11 der Einspritzdüse 3, die in den Figuren 1-3 senkrecht auf der Zeichnungsebene steht.

Die Anordnung bzw. Verteilung der Spritzlöcher 8 in der Umfangsrichtung ist dabei so gewählt, dass zumindest ein Paar 12 von zwei in Umfangsrichtung benachbarten Spritzlöchern 8 bzw. von in Umfangsrichtung benachbarten Einspritzstrahlen 9 entsteht, die in den Figuren 1-3 durch geschweifte Klammern gekennzeichnet sind. Die beiden Spritzlöcher 8 bzw. die beiden Einspritzstrahlen 9 des jeweiligen Strahlpaares 12 bzw. des jeweiligen Spritzlochpaares 12 besitzen Längsmittelachsen 13, die zwischen sich in der Umfangsrichtung einen Paarwinkel 14 einschließen. Ferner ist zwischen der Längsmittelachse 13 des jeweiligen Spritzlochs 8 des jeweiligen Spritzlochpaars 12 bzw. des jeweiligen Einspritzstrahls 9 des jeweiligen Strahlpaars 12 und einer Längsmittelachse 13 eines in der Umfangsrichtung zum jeweiligen Spritzlochpaar 12 bzw. Strahlpaar 12 benachbarten Spritzlochs 8 bzw. Einspritzstrahls 9 ein Nachbarwinkel 15 eingeschlossen. Dabei sind die Paarwinkel 14 jeweils kleiner als die Nachbarwinkel 15. Beispielsweise werden für die Paarwinkel 14 Winkelwerte bis maximal 50° bevorzugt, während für die Nachbarwinkel 15 Winkelwerte von mindestens 60° bevorzugt werden. In den gezeigten Beispielen beträgt der Paarwinkel 14 jeweils etwa 45°, während der Nachbarwinkel 15 jeweils bei etwa 80° liegt.

Das jeweilige Spritzlochpaar 12 bzw. Strahlpaar 12 charakterisiert sich dadurch, dass der Paarwinkel 14 der beiden Längsmittelachsen 13 des Strahlpaars 12 kleiner ist als die beiden in der einen und der anderen Umfangsrichtung angrenzenden Nachbarwinkel 15. Im Beispiel der Figur 1 sind genau zwei Spritzlochpaare 12 vorgesehen, die diametral voneinander abgewandt sind. Somit befindet sich in der Umfangsrichtung zwischen den beiden Spritzlochpaaren 12 jeweils ein weiteres Spritzloch 8, die voneinander diametral abgewandt sind. Eine entsprechende Anordnung ergibt sich für die zugehörigen Einspritzstrahlen 9.

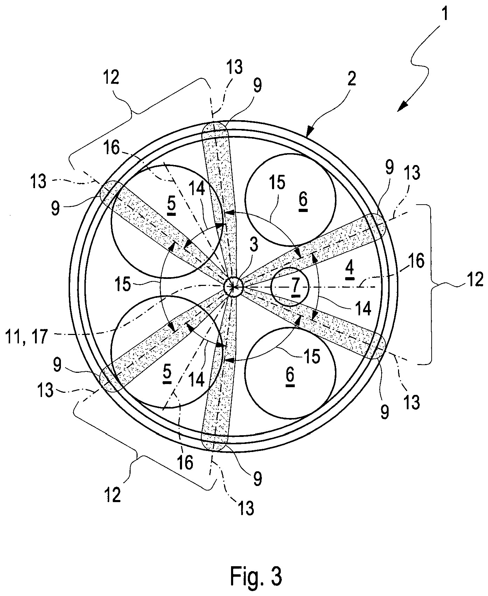

Im Unterschied dazu zeigen die Figuren 2 und 3 Ausführungsformen, bei denen genau drei Spritzlochpaare 12 vorgesehen, die zweckmäßig in der Umfangsrichtung gleichmäßig verteilt angeordnet sind. Dementsprechend sind Mittelachsen 16, die innerhalb des jeweiligen Spritzlochpaars 12 mittig zwischen den Längsmittelachsen 13 der Spritzlöcher 8 des jeweiligen Spritzlochpaars 12 verlaufen, in der Umfangsrichtung um 120° zueinander versetzt.

Bei den Ausführungsformen der Figuren 1-3 ist die Zündeinrichtung 7 zwischen den beiden Auslassventilen 6 angeordnet. Ferner ist die Zündeinrichtung 7 exzentrisch im Zylinderraum 4 positioniert, also gegenüber einer Längsmittelachse 17 des Zylinders 2 radial beabstandet. Im Unterschied dazu ist die Einspritzdüse 3 zentral im Zylinder 2 angeordnet, also im Bereich der Längsmittelachse 17 des Zylinders 2. Die Positionierung bzw. Ausrichtung der Einspritzdüse 3 erfolgt bei den hier gezeigten Ausführungsformen jeweils so, dass sich die Zündeinrichtung 7 in der Umfangsrichtung etwa mittig zwischen den beiden Einspritzstrahlen 9 eines Spritzlochpaars 12 (Figuren 1 und 3) oder zwischen zwei in der Umfangsrichtung benachbarten Spritzlochpaaren 12 (Figur 2) angeordnet ist. Bei den Ausführungsformen der Figuren 1 und 3 erfolgt die Ausrichtung der Einspritzdüse 3 ferner so, dass ein Spritzlochpaar 12 in der Umfangsrichtung zwischen den Auslassventilen 6 verläuft. Bei den Ausführungsformen der Figuren 1 und 2 erfolgt die Anordnung so, dass eines der Spritzlochpaare 12 in der Umfangsrichtung zwischen den Einlassventilen 5 verläuft.

Zweckmäßig kann die Einspritzdüse 3 koaxial zum Zylinder 2 angeordnet sein, so dass die Längsmittelachse 11 der Einspritzdüse 3 mit der Längsmittelachse 17 des Zylinders 2 zusammenfällt. Grundsätzlich ist jedoch auch eine Neigung zwischen den Längsmittelachsen 11, 17 von Einspritzdüse 3 und Zylinder 2 denkbar, die jedoch maximal 20° aufweisen soll.

Entsprechend den Figuren 4-6 kann im Düsenkörper 10 ein Versorgungspfad 18 ausgebildet sein, der zu den Spritzlöchern 8 führt. Im Versorgungspfad 18 strömt der Kraftstoff während eines Einspritzvorgangs in einer Zuströmungsrichtung 19, die in den Figuren 4-6 durch einen Pfeil angedeutet ist. Im Bereich des jeweiligen Spritzlochs 8 ist diese Zuströmungsrichtung 19 im Versorgungspfad 18, also an einer vom Zylinderraum 4 abgewandten Seite gegenüber der Längsmittelachse 13 des jeweiligen Spritzlochs 8 geneigt, und zwar vorzugsweise in einem Winkelbereich von 60°-90°. So zeigt Figur 4 ein Beispiel, bei dem ein Neigungswinkel 20 zwischen der Zuströmungsrichtung 19 und der Längsmittelachse 13 etwa 90° beträgt. In Figur 5 beträgt der Neigungswinkel etwa 80°. In Figur 6 beträgt der Neigungswinkel etwa 70°.

Entsprechend den Figuren 4-6 besitzt das jeweilige Spritzloch 8 eine koaxial zur Längsmittelachse 13 des Spritzlochs 8 gemessene Lochlänge L und einen Lochdurchmesser D. Im Beispiel ist die Lochlänge L größer als der Lochdurchmesser D. Zweckmäßige Verhältnisse von Lochlänge L zu Lochdurchmesser D liegen in einem Bereich von 0,5 bis 4,0.

In den gezeigten Beispielen besitzt das jeweilige Spritzloch 8 in seiner Längsrichtung einen innenliegenden Strahlbildungsabschnitt 21 und einen außenliegenden Austrittsabschnitt 22. Der Strahlbildungsabschnitt 21 definiert die Lochlänge L und den Lochdurchmesser D. Der Austrittsabschnitt 22 besitzt einen Durchmesser 23, der deutlich größer ist als der Lochdurchmesser D. Im Beispiel besitzt der Austrittsabschnitt eine Länge 24, die etwa gleich groß ist wie die Lochlänge L.

## Patentansprüche

1. Kolbenmotor (1) mit mindestens einem Zylinder (2) und mit einer Einspritzdüse (3) zur Direkteinspritzung eines flüssigen Kraftstoffs in einen Zylinderraum (4) des fremdgezündeten Kolbenmotors (1), mit mehreren Spritzlöchern (8) zum Erzeugen von Einspritzstrahlen (9), die an einem Düsenkörper (10) der Einspritzdüse (3) in der Umfangsrichtung verteilt angeordnet sind, wobei zumindest ein Paar (12) von in Umfangsrichtung benachbarten Spritzlöchern (8) vorgesehen ist, deren Längsmittelachsen (13) in der Umfangsrichtung einen Paarwinkel (14) einschließen, der kleiner ist als ein Nachbarwinkel (15), der in der Umfangsrichtung zwischen der Längsmittelachse (13) des jeweiligen Spritzlochs (8) des Spritzlochpaars (12) und einer Längsmittelachse (13) eines in der Umfangsrichtung zum Spritzlochpaar (12) benachbarten Spritzlochs (8) eingeschlossen ist und
- wobei genau sechs Spritzlöcher (8) vorgesehen sind,
- wobei genau zwei Spritzlochpaare (12) vorgesehen sind, die diametral voneinander abgewandt sind,
- wobei in der Umfangsrichtung zwischen den beiden Spritzlochpaaren (12) jeweils ein weiteres Spritzloch (8) angeordnet ist,
**dadurch gekennzeichnet, dass**
- dass die Spritzlöcher (8) derart angeordnet sind, dass sich während des Einspritzvorgangs eine sternförmige Anordnung der Einspritzstrahlen (9) einstellt,
- dass die Einspritzdüse (3) im Bereich einer Längsmittelachse (17) des Zylinders (2) angeordnet ist,
- dass eine Zündeinrichtung (7) des jeweiligen Zylinders (2) beabstandet zur Einspritzdüse (3) angeordnet ist,
- dass die Einspritzdüse (3) hinsichtlich ihrer Spritzlöcher (8) so ausgerichtet ist, dass die Zündeinrichtung (7) in der Umfangsrichtung zwischen den beiden Einspritzstrahlen (9) eines solchen Spritzlochpaares (12) und
- dass die Zündeinrichtung (7) in der Umfangsrichtung zwischen zwei Auslassventilen (6) des jeweiligen Zylinders (2) angeordnet ist.

2. Kolbenmotor (1) mit mindestens einem Zylinder (2) und mit einer Einspritzdüse (3) zur Direkteinspritzung eines flüssigen Kraftstoffs in einen Zylinderraum (4) des fremdgezündeten Kolbenmotors (1), mit mehreren Spritzlöchern (8) zum Erzeugen von Einspritzstrahlen (9), die an einem Düsenkörper (10) der Einspritzdüse (3) in der Umfangsrichtung verteilt angeordnet sind, wobei zumindest ein Paar (12) von in Umfangsrichtung benachbarten Spritzlöchern (8) vorgesehen ist, deren Längsmittelachsen (13) in der Umfangsrichtung einen Paarwinkel (14) einschließen, der kleiner ist als ein Nachbarwinkel (15), der in der Umfangsrichtung zwischen der Längsmittelachse (13) des jeweiligen Spritzlochs (8) des Spritzlochpaars (12) und einer Längsmittelachse (13) eines in der Umfangsrichtung zum Spritzlochpaar (12) benachbarten Spritzlochs (8) eingeschlossen ist und wobei insbesondere vorgesehen sein kann, dass die Spritzlochpaare (12) in der Umfangsrichtung gleichmäßig verteilt angeordnet sind
**dadurch gekennzeichnet, dass**
- dass genau sechs Spritzlöcher (8) und genau drei Spritzlochpaare (12) vorgesehen sind,
- dass die Einspritzdüse (3) im Bereich einer Längsmittelachse (17) des Zylinders (2) angeordnet ist,
- dass eine Zündeinrichtung (7) des jeweiligen Zylinders (2) beabstandet zur Einspritzdüse (3) angeordnet ist,
- dass die Einspritzdüse (3) hinsichtlich ihrer Spritzlöcher (8) so ausgerichtet ist, dass die Zündeinrichtung (7) in der Umfangsrichtung zwischen den beiden Einspritzstrahlen (9) eines solchen Spritzlochpaares (12) oder zwischen zwei in der Umfangsrichtung benachbarten Spritzlochpaaren (12) angeordnet ist und
- dass die Zündeinrichtung (7) in der Umfangsrichtung zwischen zwei Auslassventilen (6) des jeweiligen Zylinders (2) angeordnet ist.

3. Kolbenmotor nach Anspruch 1 oder 2,
**dadurch gekennzeichnet, dass**
der jeweilige Paarwinkel (14) maximal 50° beträgt, während der jeweilige Nachbarwinkel (15) minimal 60° beträgt.

4. Kolbenmotor nach einem der Ansprüche 1 bis 3,
**dadurch gekennzeichnet, dass**
im Düsenkörper (10) ein zu den Spritzlöchern (8) führender Versorgungspfad (18) ausgebildet ist, in dem der Kraftstoff während eines Einspritzvorgangs in einer Zuströmungsrichtung (19) strömt, die im Bereich des jeweiligen Spritzlochs (8) im Versorgungspfad (18) gegenüber der Längsmittelachse (13) des jeweiligen Spritzlochs (8) in einem Bereich von 60° bis 90° geneigt ist.

5. Kolbenmotor nach einem der Ansprüche 1 bis 4,
**dadurch gekennzeichnet, dass**
das jeweilige Spritzloch (8) eine Lochlänge (L) und einen Lochdurchmesser (D) aufweist, wobei ein Verhältnis von Lochlänge (L) zu Lochdurchmesser (D) in einem Bereich von 0,5 bis 4,0 liegt.

## Claims

1. Piston engine (1), having at least one cylinder (2) and having an injection nozzle (3) for direct injection of a liquid fuel into a cylinder chamber (4) of the spark-ignited piston engine (1), having a plurality of injection holes (8) to produce injection jets (9) which are arranged distributed around the periphery of a nozzle body (10) of the injection nozzle (3), wherein at least one pair (12) of injection holes (8) adjacent in the peripheral direction is provided, of which the longitudinal central axes (13) include a pair angle (14) in the peripheral direction which is smaller than a neighbouring angle (15) which is included in the peripheral direction between the longitudinal central axis (13) of the respective injection hole (8) of the injection hole pair (12) and a longitudinal central axis (13) of an injection hole (8) adjacent to the injection hole pair (12), and
- wherein precisely six injection holes (8) are provided,
- wherein precisely two injection hole pairs (12) are provided which face diametrically away from each other,
- wherein a further injection hole (8) is arranged in the peripheral direction between the two injection hole pairs (12),
**characterised in that**
- the injection holes (8) are arranged so that during the injection process a star-shaped arrangement of the injection jets (9) is set,
- the injection nozzle (3) is arranged in the region of a longitudinal central axis (17) of the cylinder (2),
- an ignition means (7) of the respective cylinder (2) is arranged spaced apart from the injection nozzle (3),
- the injection nozzle (3) is orientated with respect to its injection holes (8) such that the ignition means (7) is arranged in the peripheral direction between the two injection jets (9) of such an injection hole pair (12) and
- the injection means (7) is arranged in the peripheral direction between two outlet valves (6) of the respective cylinder (2).

2. Piston engine (1), having at least one cylinder (2) and having an injection nozzle (3) for direct injection of a liquid fuel into a cylinder chamber (4) of the spark-ignited piston engine (1), having a plurality of injection holes (8) to produce injection jets (9) which are arranged distributed around the periphery of a nozzle body (10) of the injection nozzle (3), wherein at least one pair (12) of injection holes (8) adjacent in the peripheral direction is provided, of which the longitudinal central axes (13) include in the peripheral direction a pair angle (14) which is smaller than a neighbouring angle (15), which is included in the peripheral direction between the longitudinal central axis (13) of the respective injection hole (8) of the injection hole pair (12) and a longitudinal central axis (13) of an injection hole (8) adjacent to the injection hole pair (12) in the peripheral direction, and wherein it can be provided in particular that the injection hole pairs (12) are evenly distributed in the peripheral direction, **characterised in that**
- precisely six injection holes (8) and precisely three injection hole pairs (12) are provided,
- the injection nozzle (3) is arranged in the region of a longitudinal central axis (17) of the cylinder (2),
- an ignition means (7) of the respective cylinder (2) is arranged spaced apart from the injection nozzle (3),
- the injection nozzle (3) is orientated with respect to its injection holes (8) in such a way that the ignition means (7) is arranged in the peripheral direction between the two injection jets (9) of such an injection hole pair (12) or between two injection hole pairs (12) adjacent in the peripheral direction, and
- the ignition means (7) is arranged in the peripheral direction between two outlet valves (6) of the respective cylinder (2).

3. Piston engine according to claim 1 or 2,
**characterised in that**
the respective pair angle (14) is at most 50° whereas the respective neighbouring angle (15) is at least 60°.

4. Piston engine according to one of claims 1 to 3,
**characterised in that**
in the nozzle body (10) a supply path (18) leading to the injection holes (8) is formed, in which the fuel flows during an injection process in an inflow direction (19), which is inclined in the region of the respective injection hole (8) in the supply path (18) with respect to the longitudinal central axis (13) of the respective injection hole (8) at an angle of between 60° and 90°.

5. Piston engine according to one of claims 1 to 4,
**characterised in that**
the respective injection hole (8) has a hole length (L) and a hole diameter (D), wherein a ratio of the hole length (L) to the hole diameter (D) is in a range of from 0.5 to 4.0.

## Revendications

1. Moteur à pistons (1) comprenant au moins un cylindre (2) et un injecteur (3) destiné à l'injection directe d'un carburant liquide dans une chambre de cylindre (4) du moteur à pistons (1) à allumage commandé, comprenant plusieurs trous d'injection (8) destinés à générer des jets d'injection (9) qui sont répartis sur un corps (10) de l'injecteur (3) dans la direction périphérique, au moins une paire (12) de trous d'injection (8) adjacents étant prévue dans la direction périphérique, dont les axes longitudinaux (13) renferment dans la direction périphérique un angle (14) de paire qui est inférieur à un angle adjacent (15) qui est renfermé dans la direction périphérique entre l'axe longitudinal (13) du trou d'injection (8) respectif de la paire (12) de trous d'injection, et un axe longitudinal (13) d'un trou d'injection (8) adjacent dans la direction périphérique à la paire (12) de trous d'injection et
- étant prévus exactement six trous d'injection (8),
- étant prévus exactement deux paires (12) de trous d'injection qui sont en regard les uns des autres diamétralement,
- dans la direction périphérique entre les deux paires (12) de trous d'injecteurs étant disposé respectivement un autre trou d'injection (8),
**caractérisé en ce que**
- les trous d'injection (8) sont disposés de telle sorte qu'il se produit pendant le processus d'injection un agencement en étoile des jets d'injection (9) ;
- **en ce que** l'injecteur (3) est disposé dans la région d'un axe longitudinal (17) du cylindre (2),
- **en ce qu'**un dispositif d'allumage (7) de chaque cylindre (2) est éloigné de l'injecteur (3),
- **en ce que** l'injecteur (3) est aligné par rapport à ses trous d'injection (8) de telle sorte que le dispositif d'allumage (7) soit disposé dans la direction périphérique entre les deux jets d'injection (9) d'une telle paire (12) de trous d'injection et
- **en ce que** le dispositif d'allumage (7) est disposé dans la direction périphérique entre deux soupapes d'échappement (6) de chaque cylindre (2).

2. Moteur à pistons (1) comprenant au moins un cylindre (2) et un injecteur (3) destiné à l'injection directe d'un carburant liquide dans une chambre (4) de cylindre du moteur à pistons (1) à allumage commandé, comprenant plusieurs trous d'injection (8) destinés à générer des jets d'injection (9) qui sont répartis dans la direction périphérique sur un corps (10) de l'injecteur (3), au moins une paire (12) de trous d'injection (8) adjacents étant prévue dans la direction périphérique, dont les axes longitudinaux (13) renferment dans la direction périphérique un angle de paire (14) qui est inférieur à un angle adjacent (15) qui est renfermé dans la direction périphérique entre l'axe longitudinal (13) d'un trou d'injection (8) respectif de la paire (12) de trous d'injection et un axe longitudinal (13) d'un trou d'injection (8)adjacent dans la direction périphérique à la paire (12) de trous d'injection et en particulier il peut être prévu que les paires (12) de trous d'injection soient réparties à intervalles réguliers dans la direction périphérique, **caractérisé en ce qu'**
- exactement six trous d'injection (8), et exactement trois paires de trous d'injection (12) sont prévus,
- **en ce que** l'injecteur (3) est disposé dans la région d'un axe longitudinal (17) du cylindre (2),
- **en ce qu'**un dispositif d'allumage (7) de chaque cylindre (2) est éloigné de l'injecteur (3),
- **en ce que** l'injecteur (3) est aligné par rapport à ses trous d'injection (8) de telle sorte que le dispositif d'allumage (3) soit disposé dans la direction périphérique entre les deux jets d'injection (9) d'une telle paire (12) de trous d'injection ou entre deux paires (12) de trous d'injections adjacentes dans la direction périphérique et **en ce que** le dispositif d'allumage (7) est disposé dans la direction périphérique entre deux soupapes d'échappement (6) de chaque cylindre (2).

3. Moteurs à pistons selon la revendication 1 ou la revendication 2, **caractérisé en ce que** l'angle de paire respectif (14) s'élève au maximum à 50°, tandis que l'angle adjacent (15) respectif s'élève au minimum à 60°.

4. Moteur à pistons selon l'une quelconque des revendications 1 à 3, **caractérisé en ce que** dans le corps (10) d'injecteur est formé un chemin d'alimentation (18) conduisant aux trous d'injection (8), dans lequel le carburant s'écoule pendant le processus d'injection dans une direction d'écoulement (19), qui dans la zone de chaque trou d'injection (8) dans le chemin d'alimentation (18) par rapport à l'axe longitudinal de chaque trou d'injection (8) est inclinée dans une plage comprise entre 60° et 90°.

5. Moteur à pistons selon l'une quelconque des revendications 1 à 4, **caractérisé en ce que** le trou d'injection respectif (8) présente une longueur (L) et un diamètre (D), un rapport de longueur (L) par rapport au diamètre (D) se trouvant dans une plage comprise entre 0,4 et 4,0.
